# EUROPEAN PATENT APPLICATION

(11) **EP 4 354 386 A1**
(43) Date of publication of application: **17.04.2024**
(21) Application number: 21945229.9
(22) Date of filing: 11.06.2021
(51) Int. Cl.: G06T 7/00

(54) **EMOTION INFERENCE DEVICE, EMOTION INFERENCE METHOD, AND PROGRAM**

(71) Applicant: Life Quest Inc., Tokyo 107-0062 (JP)
(72) Inventor: HAMAGUCHI Reo, Tokyo 107-0062 (JP); KAYAMA Tetsu, Tokyo 107-0062 (JP)
(74) Representative: AOMB Polska Sp. z.o.o.
(86) International application number: PCT/JP2021/022419
(87) International publication number: WO 2022/259560

(57) **Abstract**

To infer an emotion precisely. An emotion inferring apparatus (1) according to the present embodiment comprises an image capture part (13) and a controller part (14). The image capture part (13) captures a subject's face changing an expression according to the guidance that instructs the expression to a subject. A controller part (14) detects fine expressions appearing on the subject's face from moving images of subject's face captured and obtained by the image capture part (13). Then, the controller part (14) infers the emotion of subject depending on the ratio for each of the kind of the detected fine expression. Furthermore, the controller part (14), if the fine expressions are not detected, obtains a changing-rate of expressions of the subject from moving images of the subject's face captured and obtained by the image capture part (13) and infers an emotion of the subject depending on the changing-rate.

## Description

### Field of Invention

The present invention relates to an emotion inferring apparatus, an emotion inferring method and a program, and more particularly relates to an emotion inferring apparatus, an emotion inferring method and a program which can infer emotions precisely.

### Background Art

An emotion inferring apparatus, which infers the emotion of person by recognizing person's expression, has been known (for example Patent Literature 1). Here, all of the description, claims, and the drawings of Patent Literature 1 should be herein incorporated by reference.

### Prior Art Literature

### Patent Literature

Patent Literature 1: Japanese Patent Laid Open 2008-146318

### Summary of Invention

### Problem to be Solved by Invention

However, a human being can form expressions. Furthermore, the emotions of human being are not single and various emotions will be mixed complexly. Thus, the emotion of human being cannot be simply inferred only by the expressions.

The present invention has been completed to solve the above problem and aims to provide an emotion inferring apparatus, an emotion inferring method and a program which can infer emotions precisely.

### Means for Solving Problem

For achieving the above object, an emotion inferring apparatus (1) according to a first aspect of the present invention comprises: an image capture part (13) capturing a subject's face; a controller part (14) detecting fine expressions appearing on the subject's face from images of the subject' face captured and obtained by the image capture part (13) and inferring an emotion of the subject depending on a ratio of the detected fine expressions for each of kinds.

In the above emotion inferring apparatus (1), the controller part (14) categorizes detected fine expressions into individual types and infers an emotion of the subject depending on ratios of each of fine expressions categorized into the individual types.

In the above emotion inferring apparatus (1), the image capture part (13) captures the subject's face with changing the expressions according to guidance instructing expressions to the subject, and if the fine expressions are not detected, the controller part (14) obtains a changing-rate of expressions of the subject from images of the subject's face captured and obtained by the image capture part (13) and infers an emotion of the subject depending on the changing-rate.

The above emotion inferring apparatus (1), a changing-rate pattern table (3) registering patterns of changing rate of the expression in association with each of the emotion is further comprised, and the controller part (14) infers the emotion corresponding to patterns of changing-rates of the expressions obtained from images of the subject's face in the changing-rate pattern table (3) as an emotion of the subject.

An emotion inferring apparatus (1) according to a second aspect of the present invention comprises: an image capture part (13) capturing a subject's face with changing expressions according to guidance instructing expressions to the subject, and the controller part (14) obtaining a changing-rate of expressions of the subject from images of the subject's face captured and obtained by the image capture part (13) and inferring an emotion of the subject depending on the changing-rate.

An emotion inferring method according to a third aspect of the present invention comprises: capturing by an image capture part (13) a subject's face; detecting by a controller part (14) fine expressions appearing on the subject's face from images of the subject' face captured and obtained by the image capture part (13); and inferring by the controller part (14) an emotion of the subject depending on a ratio of the detected fine expression for each of kinds.

An emotion inferring method according to a fourth aspect of the present invention comprises: capturing by an image capture part (13) a subject's face with changing the expressions according to guidance instructing expressions to a subject; obtaining by a controller part (14) a changing-rate of expressions of the subject from images of the subject's face captured and obtained by the image capture part (13) and inferring by the controller part (14) an emotion of the subject depending on the changing rate.

A program according to a fifth aspect of the present invention makes a computer execute: a process of capturing a subject's face; a process of detecting fine expressions appearing on the subject's face from images of the subject' face captured and obtained; and a process of inferring an emotion of the subject depending on a ratio of the detected fine expressions for each of kinds.

A program according to a sixth aspect of the present invention makes a computer execute: a process of capturing a subject's face with changing expressions according to guidance instructing expressions to a subject, and a process of obtaining a changing-rate of expressions of the subject from images of the subject's face captured and obtained; and a process of inferring an emotion of the subject depending on the changing rate.

### Advantageous Effect of Invention

According to the present invention, an emotion inferring apparatus, an emotion inferring method and a program that can infer the emotions precisely can be provided.

### Brief Description of Drawings

Fig. 1 is a block diagram showing an implementation example of an emotion inferring apparatus according to the present invention.
Fig. 2 is a drawing showing an implementation example of a guidance table.
Fig. 3 is a drawing showing an implementation example of a change rate pattern-table.
Fig. 4 is a flowchart showing details of emotion inferring processing.

### Embodiment for Practicing Invention

Hereafter, best modes for practicing the present invention will be described.

First, a configuration of an emotion inferring apparatus according to the present invention will be described with reference to drawings.

The emotion inferring apparatus according to the present invention is one that infers the emotion of subject from fine expressions appearing on the subject's face and is configured by, for example, a general-purpose smartphone, tablet computer, and personal computer, and the like.

Here, the "fine expressions" means the quite fast movements of face that appear instantly and then disappear depending on the suppressed emotions that can appear unconsciously. A time duration within which the fine expressions appears is not more than 1 second and is generally the time duration to be one-fiftieth second. Thus, the changes in the parts of face coming from blinking, convulsion, shifts of eyeballs and movements in the whole face are not categorized as the fine expressions. Now, the fine expressions may include the slight movements of face (slight expression) which occur due to the emotions and the time duration within which the slight expressions appears may be not less than 1 second. Here, the definition of fine expressions should not be limited to the above and may change depending on future studies about the fine expressions. The kinds of fine expressions, that is, the kinds of emotions appear as the fine expressions include a plurality of kinds, and the kinds may be , for example, "Anger", "Dislike", "Dear(dread)", "Pleasure (Happiness, Lucky)", "Sadness", and "Surprise", and the like. Depending on the kinds of fine expressions, the parts on the face to be changed (eye, eyebrow, lips, and cheeks etc.) and the ways of changes (change amounts, change directions, and change durations) becomes different.

For example, the expression of "Anger" is the combination of action that pulls both eyebrows toward the center; action that opens eyes largely; action that exerts force to eyelids; action that closes lips tightly; and action that opens a mouth.

The fine expressions of "Dislike" is an action that crinkles its nose.

The fine expression of "Fear" is the combination of action that pulls up both eyebrows; action that pulls both eyebrows toward the center; action that opens eyes largely; action that exerts force to eyelids; and action that pulls the corners of mouth laterally.

The fine expression "Pleasure" is the combination of action that pulls up cheeks; action that pulls up the corner of mouth; and action that pulls up only the corner of mouth.

The fine expression "Sadness" is the combination of action that pulls up the inward sides of eyebrows; action that pulls both eyebrows toward the center; action that pushes down the corners of mouth; and pulls up a lower lip.

The fine expression "Surprise" is the combination of action that pulls up both eyebrows; action that opens eyes largely; and action that opens the mouth.

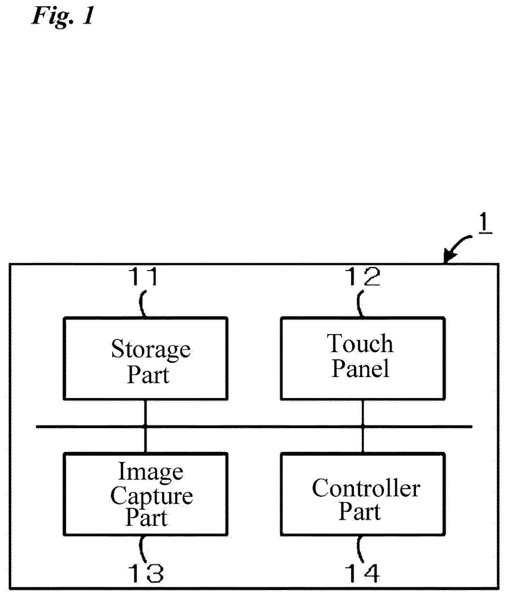

Fig. 1 is a block diagram showing an implementation example of an emotion inferring apparatus according to the present embodiment.

As shown in Fig. 1, the emotion inferring apparatus 1 comprises a storage part 11, a touch panel 12, an image capture part 13, and a controller part 14, and these are interconnected through buses etc.

The storage part 11 can be configured from a non-volatile memory etc. such as, for example, a general-purpose flush-memory and the like. In the storage part 11, various application programs are installed. According to the present embodiment, in the storage part 11, an emotion inferring application-program (hereafter referred to "emotion inferring app."), which infers the emotion of subject from the fine expressions appearing on the subject's face, is installed.

Furthermore, the storage part 11 stores a guidance table registering the guidance that instructs expressions to the subject by illustration and a changing-rate pattern table registering patterns of changing-rate (changing-rate pattern) of the expressions of subject (changing-rate). Furthermore, the storage part 11 stores the guidance pointer that designates the guidance to be displayed on the touch panel 12.

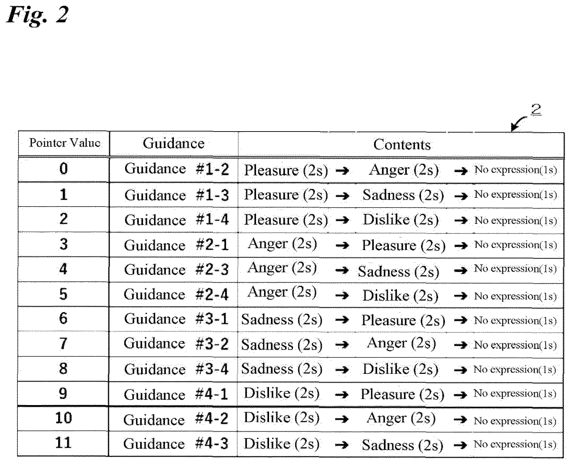

Fig. 2 is a drawing showing the implementation example of guidance table.

A shown in Fig. 2, the guidance table 2 registers the guidance of 12 kinds in association with the values of guidance pointers. In the present embodiments, the guidance includes the images of five seconds in total that instructs two different expressions for every 2 seconds and thereafter instructs forming No expression for 1 second to the subject. For example, the guidance #1-2 instructs first for the subject to form the expression of "Pleasure" for two seconds; and instructs next to form the expression of "Anger" for two seconds; and instructs finally to form no expression for 1 second.

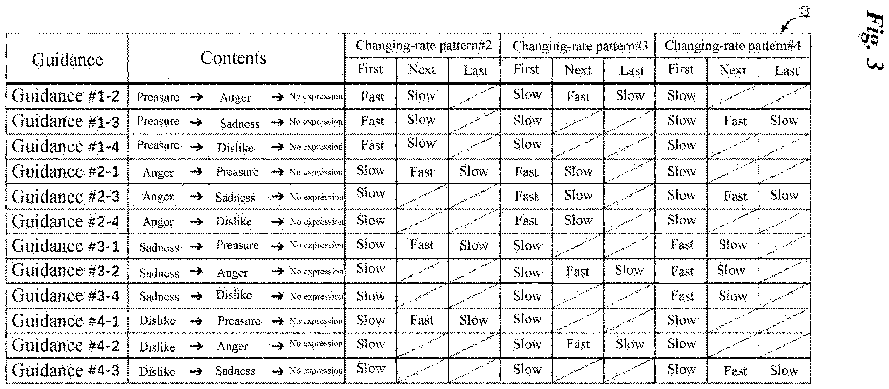

Fig. 3 is a drawing showing the configuration example of changing-rate pattern table.

As shown in Fig. 3, the changing-rate pattern table 3 registers the changing-rate pattern #2-#4 in association with the guidance of 12 kinds. The changing rate patters #2 corresponds to the case that the emotion of subject is "Happy"; the changing-rate pattern #3 corresponds to the case of "Irritation"; and the changing-pattern #4 corresponds to the case of "Depression", respectively. That is, the changing-rate pattern table 3 registers the changing-rate patterns #2-#4 for each of the emotions correspondingly. To the changing-rate patterns #2-#4, the slowness-and-fastness of changing-rates of 21 kinds are set beforehand within each of changes of 36 kinds within the expression of subject.

For example, in the case that the emotion of subject is "Happy", when the subject changes the expressions according to the guidance #1-2, as shown in the changing-rate pattern #2, the first changing-rate to the "Pleasure" becomes faster than usual one and the next changing-rate from "Pleasure" to "Anger" becomes slower than usual one. Furthermore, also when the subject has changed the expressions according to the guidance #1-3 and #1-4, the first changing-rate to "Pleasure" becomes faster than usual one and the next changing-rates from "Pleasure" to the expression other than "Pleasure" such as "Sadness" and "Dislike" becomes slower than usual one. On the other hand, when the subject has changed the expressions according to the guidance other than the guidance #1-2-#1-4, as shown in the changing-rate pattern #2, the changing-rate to the expression other than the first "Pleasure" becomes slower than usual one. Besides, when the subject has changed the expressions according to the guidance #2-1, #3-1, and #4-1, as shown in the changing-rate pattern #2, the changing-rate to the expression other than the first "Pleasure" becomes slower than normal one; the changing-rate to the next "Pleasure" becomes faster than usual one; and the changing-rate to the last "No expression" becomes slower than usual one.

In the case that the emotion of subject is "Irritation", when the subject changes the expressions according to the guidance #2-1, #2-3, and #2-4, as shown in the changing-rate pattern #3, the changing-rate to the first "Anger" becomes faster than usual one and the next changing-rate from "Anger" to the expression other than "Anger" becomes slower than usual one. On the other hand, when the subj ect has changed the expressions other than the guidance #2-1, #2-3, and #2-4, as shown in the changing-rate pattern #3, the changing-rates other than the first "Anger" becomes slower than usual one. Besides, when the subject has changed the expressions according to the guidance #1-2, #3-2, and #4-2, as shown in the changing-rate pattern #3, the changing-rate to the expression other than the first "Anger" becomes faster than normal one and the changing-rate to the last "No expression" becomes slower than usual one.

In the case that the emotion of subject is "Depression", when the subject has changed the expressions according to the guidance #3-1, #3-2, and #3-4, as shown in the changing-rate pattern #4, the changing-rate to the fist "Sadness" becomes faster than usual one and the next changing-rate from "Sadness" to the expression other than "Sadness" becomes slower than usual one. On the other hand, when the subject has changed the expressions other than the guidance #3-1, #3-2, and #3-4, as shown in the changing-rate pattern #4, the changing-rates other than the first "Sadness" becomes slower than usual one. Besides, when the subject has changed the expressions according to the guidance #1-3, #2-3and #4-3, as shown in the changing-rate pattern #4, the changing-rate to the expression other than the first "Sadness" becomes slower than normal one and the changing-rate to the last "No expression" becomes slower than usual one.

The touch panel 12 shown in Fig. 1 can be configured by a general-purpose touch panel etc. for example, the combination of a liquid crystal display apparatus and a pointing device. The touch panel 12 displays various display screens and receives various operations by the subject. According to the present embodiment, the subject can tap the icon of emotion inferring app. displayed on the touch panel 12 so as to start the emotion inferring app. and/or to instruct inference of the emotion of subject. Furthermore, onto the touch panel 12, the guidance instructing expressions to the subject with the illustrations is displayed.

The image capture part 13 can be configured with including a light-receiving element, for example, CCD (Charge Coupled Device) etc. According to the present embodiment, the subject captures its face by itself (selfie) by the image capture part 13, the face changing the expressions according to the guidance.

The controller part 14 is configured, for example, by CPU (Central Processing Unit), ROM (Read Only Memory), and RAM (Random Access Memory) etc. CPU uses RAM as a working memory and executes adequately various programs etc. stored in ROM and the storage part 11 thereby controlling various operations of the emotion inferring apparatus 1.

In the present embodiment, the controller part 14 initializes the value of guidance pointer to "0" in response to the instruction of subject for inferring the emotion of subject onto the emotion inferring app. which is displayed on the touch panel 12. Next, the controller part 14 retrieves the guidance corresponding to the value of guidance pointer from the guidance table 2. For example, when the value of guidance pointer is "0", the controller part 14 retrieves the guidance #1-2 from the guidance table 2.

Then, the controller part 14 displays on the touch panel 12 the guidance which has been retrieved from the guidance table 2 and captures the subject's face with changing the expression according to the guidance and obtains a moving image of 30-60 frame rates by the image capture part 13.

Subsequently, the controller part 14 determines whether or not the value of guidance pointer is "11" that is the upper most value. The controller part 14 determines, if the value of guidance pointer is less than "11", that all of the guidance is not displayed yet; increases the value of guidance pointer by 1; after that displays on the touch panel 12 the guidance corresponding to the value of guidance pointer after the increment; and captures again the moving image of the subject's face by the image capture part 13.

Contradictory to this, the controller part 14 determines, if the value of guidance pointer is "11", that all of the guidance has been displayed and detects the fine expressions appearing on the subject' face. Particularly, the controller part 14 detects the fine expressions for every frame image forming the moving image.

Here, from the result examining the race that does not contact to Western Culture, it has been understood that four expressions "Pleasure", "Anger", "Dislike", and "Sadness" are recognized independent of the difference among the cultures, and on the other hand, two expressions "Fear" and "Surprise" cannot become distinctive. Then, the controller 14, categorizes, if at least one fine expression can be detected, the types of fine expressions into "Positive", "Negative1", "Negative2", and "Other" for each of the fine expressions detected.

Particularly, the controller part 14 categorizes, if the detected fine expressions is "Pleasure", the type of fine expression into "Positive". The controller part 14 categorizes, if the detected fine expression is "Anger", the type of fine expression into "Negative1". Besides, the controller 14 categorizes, if the detected fine expression is "Sadness", the type of expression into "Negative2". Furthermore, the controller part 14, if the detected fine expression is "Dislike", determines whether or not that is to be biased to "Anger" or to be biased to "Sadness" from the face actions other than the nose; if it is biased to "Anger", categorizes the type of expression into "Negative1"; and if it is biased to "Sadness", categorizes it into "Negative2". Furthermore, the controller part 14, if the detected fine expression is "Fear", determines whether or not its duration time is not less than a predetermined duration; if the duration time is less than the predetermined duration, determines to be of instant; and categorizes the type of fine expression into "Other". On the other hand, the controller part 14, if the duration time is not less than the predetermined duration, determines continuous and determines whether or not it is to be biased to "Anger" or to be biased to "Sadness" from the face actions other than the nose. Then, the controller part 14 categorizes, if it is biased to "Anger", the type of expression into the "Negative1" or categorizes it if it is biased to "Sadness" into "Negative2".

Here, the emotion of human being is usually not single, and a plurality of emotions are complexly mixed so that it may appear as the fine expressions on the subject's face. Thus, the controller part 14 obtains the ratios of each of the fine expressions categorized into the individual type within the moving image of the subject's face. For example, the controller part 14 obtains, when detecting the 15 frame images capturing the fine expressions categorized into "Positive", and detecting 5 frame images capturing the fine expression categorized into "Negative1", and detecting 5 frame images capturing the fine expression categorized into "Negative2", the ratio of fine expression categorized into "Positive" to be 60%; obtains the ratio of fine expression categorized into the "Negative1" to be 20%; and obtains the ratio of fine expression categorized into the "Negative2" to be 20%.

Thereafter, the controller part 14 infers, depending on the ratios of each of fine expressions, that is, the ratios of fine expressions for each of the kinds, the emotion of subject to be any one of "Neutral", "Happy", "Irritation", and "Depression".

Particularly, the controller part 14 infers that the emotion of subject is to be "Neutral" if the ratio of fine expressions categorized into "Positive" and the ratio of fine expressions categorized into any one of "Negative1" and "Negative2" are approximately equal. In addition, the controller part 14 infers that the emotion of subject is to be "Happy" if the ratio of fine expressions categorized into "Positive" is higher than the ratio of fine expressions categorized into any one of "Negative1" and "Negative2". Furthermore, the controller part 14 infers that the emotion of subject is to be the "Irritation" if the ratio of fine expressions categorized into "Negative1" is higher than the ratio of fine expressions categorized into any one of "Positive" and "Negative2". Moreover, the controller part 14 infers that the emotion of subject is to be in the "Depression" if the ratio of fine expression categorized into "Negative2" is higher than the ratio of fine expressions categorized into any one of "Positive" and "Negative1".

Contradictory to the above, the controller part 14, if no fine expression has been detected, measures the duration required for the subject to change the expression according to the guidance (changing duration). Particularly, the controller part 14 measures the changing duration of expression from the number of frame images required before the expression has changed. For example, when the subject changes the expressions according to the guidance #1-2 shown in Fig. 2 as "Pleasure" → "Anger" → "No expression", the controller part 14 measures for the subject three changing durations including the duration required to change the expression to "Pleasure", the duration required to change the expression to "Anger", and the duration required to change the expression to "No expression". The controller part 14 measures 36 changing durations in total according to all of the 12 kinds of guidance shown in Fig. 2.

Subsequently, the controller part 14 compares predetermined reference ranges for each of the changing duration of 36 kinds which has been measured so as to determine the slowness-and-fastness of changing-rates. Particularly, the controller part 14 determines, when the changing duration being longer than the predetermined reference range, that the changing duration is "slow"; determines, when it being within the predetermined reference range, to be "normal"; and when it being shorter than the predetermined reference range, determines to be "fast". Here, since major subjects are adults in the ages being able to work, for example, the average value ± standard deviation of changing duration may be obtained from the subjects determined to be in an average stress level by simplified questionnaires for occupational stress and this can be the predetermined reference range.

Then, the controller part 14 performs the matching of determined 36 slowness-and-fastness patterns of changing-rates with the changing-rate patterns #2-#4 shown in Fig. 3 to infer the emotion of subject into any one of "Neutral", "Happy", or "Depression".

Particularly, the controller part 14 performs the matching of determined the slowness-and-fastness of 36 changing-rates with the slowness-and-fastness of 21 changing-rate set in the changing-rate patterns #2-#4 to detect the changing rate pattern #2-#4 which shows matching of not less than 11 within 21, that is, to be 50% or more.

The controller part 14 infers, if the determined slowness-and-fastness of 36 changing-rates matches to the slowness-and-fastness of 21 changing-rates set in the changing rate pattern #2 not less than 50%, the emotion of subject to be "Happy" corresponding to the changing rate pattern #2.

Besides, the controller part 14 infers, if the determined slowness-and-fastness of 36 changing-rates matches to the slowness-and-fastness of 21 changing-rates set in the changing rate pattern #3 not less than 50%, the emotion of subject to be "Irritation" corresponding to the changing rate pattern #3.

Furthermore, the controller part 14 infers, if the determined slowness-and-fastness of 36 changing-rates matches to the slowness-and-fastness of 21 changing-rates set in the changing rate pattern #4 not less than 50%, the emotion of subject to be "Depression" corresponding to the changing rate pattern #4.

As described above, the controller part 14 infers, in the changing-rate pattern table 3 shown in Fig. 3, the emotions of subject as the emotion corresponding to the changing-rate pattern of expressions obtained from the moving image of subject's face.

Furthermore, the controller part 14 infers, if those matching to any one of the changing-rate pattern #2-#4 is less than 3, that is, the matching degree is less than 15%, the emotion of subject to be "Neutral".

Furthermore, the controller part 14 infers, if those matching to any one of the changing-rate pattern #2-#4 is not less than 3 and less than 11, that is, the matching degree is not less than 15% and is less than 50%, the emotion corresponding to the changing-rate pattern showing the highest matching degree as the emotion of subject.

Next, the processing of emotion inference executed by the emotion inferring apparatus 1 comprising the above configuration will be described with reference to drawings.

After the subject starts the emotion inferring app. by tapping the icon of emotion inferring app. displayed on the touch panel 12, in response to the instruction of the emotion inference from the subject, the emotion inferring apparatus 1 starts the emotion inferring processing.

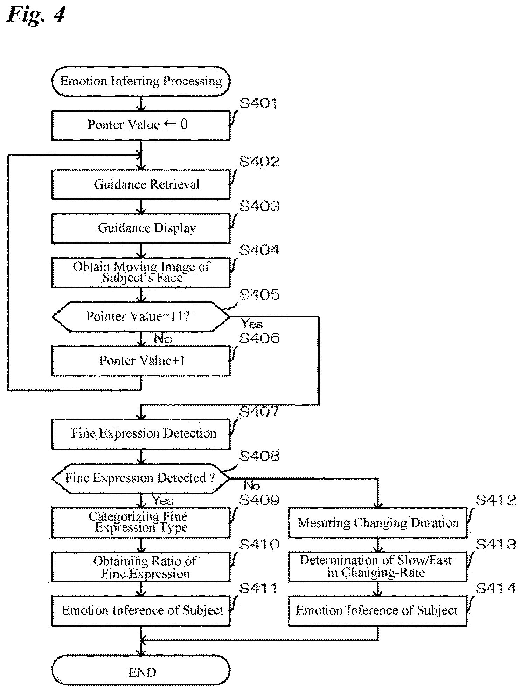

Fig. 4 is a flowchart showing the details of emotion inferring processing.

In the emotion inferring processing shown in Fig. 4, the controller part 14 first initializes the value of guidance pointer to "0" (Step S401).

Next, the controller part 14 retrieves the guidance corresponding to the value of guidance pointer from the guidance table 2 (Step S402).

Then, the controller part 14 displays on the touch panel 12 the guidance retrieved in Step S402 (Step S403) and captures the subject's face with changing expression according to the guidance and obtains the moving image in 30-60 frame rates by the image capture part 13 (Step S404).

Subsequently, the controller part 14 determines whether or not the value of the guidance pointer is the upper most value "11" (Step S405).

The controller part 14, if the value of guidance pointer is less than "11" (Step S405; No), determines that all of the guidance is not presented yet; increases the value of guidance pointer by 1 (Step S406); and then reverts to Step S402.

Contradictory to the above, the controller part 14, if the value of guidance pointer is "11" (Step S405; Yes), determines that all of the guidance has been presented and detects the fine expressions appearing on the subject's face from the moving image of subject' face obtained in Step S404 (Step S407).

The controller part 14, when at least one fine expression can be detected in Step S407 (Step S408; Yes), categorizes the type of fine expression into any one of the "Positive", "Negative1", "Negative2" and "Other" (Step S409) for each of the type of fine expressions detected in Step S407.

Subsequently, the controller part 14 determines the ratio of each of the fine expressions categorized into the individual types in the moving image of subject's face (Step S410).

Then, the controller part 14 infers, depending on the ratios of each of the fine expressions, that is, the ratios of fine expressions for each of the kinds, the emotion of subject as the "Neutral", "Happy", and "Depression" (Step S411) and after that terminates the emotion inferring processing.

Contradictory to the above, the controller part 14, when no fine expression cannot be obtained in Step S407 (Step S408; No), measures the duration required for the subject to change the expression according to the guidance (changing duration) (Step S412).

Subsequently, the controller part 14 comperes each of 36 changing durations measured in Step S412 with the predetermined reference range so as to determine the slow- and first of changing rates (Step S413).

Then, the controller part 14 performs the patten matching of the slowness-and-fastness of 36 changing-rates determined in Step S413 with the changing-rate patterns #2-#4 shown in Fig. 3 and infers the emotion of subject as any one of the "Neutral", "Happy", and "Irritation" (Step S414), and after that terminates the emotion inferring processing.

As described above, the emotion inferring apparatus 1 according to the present embodiment comprises the image capture part 13 and the controller part 14. The image capture part 13 captures the subject's face changing the expression according to the guidance that instructs the expression to the subject. The controller part 14 detects the fine expressions appearing on the subject's face from the images (moving image) of subject's face obtained by capturing and obtained with the image capture part 13. Then, the controller part 14 infers the emotion of subject depending on the ratio for each of the kinds of the detected fine expressions. Particularly, the controller part 14 categorizes the detected fine expressions into the individual types and infers the emotion of subject depending on the ratio of each of the fine expressions categorized into the individual types.

As described above, by inferring the emotion of subject depending on the ratio of each of the kinds of the fine expressions detected from the moving image of the subject's face, the true emotion of subject, within which a plurality of emotions is complexly mixed, can be precisely inferred.

In addition, the controller part 14, when the fine expression cannot be detected, obtains the changing rate of subject's face from the moving image of subject' face captured and obtained by the image capture part 13. Then, the controller part 14 infers the emotion of subject depending on the obtained changing rates. Particularly, the emotion inferring apparatus 1 further comprises the changing-rate pattern table 3 that registers the changing-rate patterns of expression in association with each of the emotions. The controller part 14, in the changing-rate pattern table 3, infers the emotion corresponding to the changing-rate pattern of expression obtained from the moving image of subject's face as the emotion of subj ect.

As described above, by inferring the emotion of subject depending on the changing-rate obtained from the moving image of the subject's face, the true emotion of subject, which a plurality of emotions is complexly mixed, can be inferred.

Now, the present invention should not be limited to the above embodiments and various modifications and applications may be possible. Hereafter, modifiable embodiments, which is able to apply to the present invention of the above embodiment, will be described.

In the above embodiment, the controller part 14 has been explained as categorizing the type of fine expression for each of the expressions into any one of "Positive", "Negative1", "Negative2", and "Other". However, the present invention is not limited to this and the controller part 14 may not categorize the types of fine expressions. In this instance, the emotion of subject may be inferred depending on the ratio for each of the kind of the detected fine expression, that is, the detection ratio for each of the fine expressions of 6 kinds such as "Anger", "Dislike", "Fear", "Pleasure", "Sadness", and "Surprise".

In the above embodiment, the controller part 14 has been described as one that: detecting the fine expressions appearing on the subject's face from the moving image of subject's face captured and by obtained by the image capture part 13; depending the ratio of detected fine expressions for each of the kinds, inferring the emotion of subject; and if the fine expression has not been detected, obtaining the changing-rate of the expression of subject from the moving image of subject's face captured and obtained by the image capture part 13; and depending on the changing-rate, inferring the emotion of subject. However, the present invention should not be limited to the above, the controller part 14, without detecting the fine expressions, may be one that the changing-rates of the subject's face are obtained from the moving image of face obtained and captured by the image capture part 13, and depending on the changing-rates the emotion of subject is inferred.

In the above embodiment, the description has been made as one that the controller 14 of the emotion inferring apparatus 1 infers the emotion of subject. However, the present invention should not be limited to the above, and a server apparatus interconnected to the emotion inferring apparatus 1 through a network (server computer) may infer the emotion of subject. In this instance, the controller 14 of emotion inferring apparatus 1 transmits through the network to the server apparatus the moving image of subject' face captured and obtained by the image capture part 13. Then, the server apparatus may detect the fine expression appearing on the subject' face from the moving image of subject's face received from the emotion inferring apparatus 1 through the network and may infer the emotion of subject depending on the ratio of fine expression detected for each of the kinds. Furthermore, the server apparatus may obtain the changing-rate of subject's expression from the moving image of subject's face captured and obtained by the image capture part 13 and may infer the emotion of subject depending on the changing-rate. Then, the server apparatus may transmit the inferred emotion of subject to the emotion inferring apparatus 1 through the network.

In the above embodiment, although the description has been made that the program, which is executed by CPU in the controller part 14, is stored beforehand in ROM and/or the storage part 11 etc., the present invention should not be limited thereto, the program for executing the above processing may be implemented to an existing general purpose computer so as to serve the function as the emotion inferring apparatus 1 according to the present invention.

Distribution methods of such program may be optional and the distribution may be provided, for example, by storing in storage media which is able to be read by the computer (flexible disk, CD (Compact Disc)-ROM, DVD (Digital Versatile Disc)-ROM etc.), or may be provided by the program, which is stored in the storage on the network such as INTERNET etc., to be downloaded.

Furthermore, if the above processing is executed by sharing OS (Operating System) and the application program or by collaboration of OS and the application program, only the application program may be stored in the storage media and/or the storage. Besides, broadcasting may be possible by overlapping the program on a carrier wave. For example, the above program may be posted on a bulletin board (BBS: Bulletin Board System) on the network and may be broadcasted through the network. Then, the configuration may be allowed within which by starting the program under the control of OS and as likely by executing the other application program the above processing can be executed.

Thus, without departing from the spirit and scope in wider meaning, to the present invention, various embodiments and modifications may be possible. In addition, the above-described embodiment is one that only describe one embodiment of the present invention and should not limit the scope of the present invention.

### Description of Signs

1 emotion inferring apparatus
11 storage part
12 touch panel
13 image capture part
14 controller part
2 guidance table
3 changing-rate pattern table

## Claims

1. An emotion inferring apparatus (1) comprising:
an image capture part (13) capturing a subject's face;
a controller part (14) detecting fine expressions appearing on the subject's face from images of the subject' face captured and obtained by the image capture part (13) and inferring an emotion of the subject depending on a ratio of the detected fine expressions for each of kinds.

2. The emotion inferring apparatus (1) of claim 1, wherein the controller part (14) categorizes detected fine expressions into individual types and infers an emotion of the subject depending on ratios of each of fine expressions categorized into the individual types.

3. The emotion inferring apparatus (1) of claim 1, wherein the image capture part (13) captures the subject's face with changing the expressions according to guidance instructing expressions to the subject, and
wherein if the fine expressions are not detected, the controller part (14) obtains a changing-rate of expressions of the subject from images of the subject's face captured and obtained by the image capture part (13) and infers an emotion of the subject depending on the changing-rate.

4. The emotion inferring apparatus (1) of claim 3, wherein a changing-rate pattern table (3) registering patterns of changing rate of the expression in association with each of the emotion is further comprised, and
wherein the controller part (14) infers the emotion corresponding to patterns of changing-rates of the expressions obtained from images of the subject's face in the changing-rate pattern table (3) as an emotion of the subject.

5. An emotion inferring apparatus (1) comprising:
an image capture part (13) capturing a subject's face with changing expressions according to guidance instructing expressions to the subject, and
the controller part (14) obtaining a changing-rate of expressions of the subject from images of the subject's face captured and obtained by the image capture part (13) and inferring an emotion of the subject depending on the changing-rate.

6. An emotion inferring method comprising:
capturing by an image capture part (13) a subject's face;
detecting by a controller part (14) fine expressions appearing on the subject's face from images of the subject' face captured and obtained by the image capture part (13); and
inferring by the controller part (14) an emotion of the subject depending on a ratio of the detected fine expression for each of kinds.

7. An emotion inferring method comprising:
capturing by an image capture part (13) a subject's face with changing the expressions according to guidance instructing expressions to a subject;
obtaining by a controller part (14) a changing-rate of expressions of the subject from images of the subject's face captured and obtained by the image capture part (13) and
inferring by the controller part (14) an emotion of the subject depending on the changing rate.

8. A program making a computer execute:
a process of capturing a subject's face;
a process of detecting fine expressions appearing on the subject's face from images of the subject' face captured and obtained; and
a process of inferring an emotion of the subject depending on a ratio of the detected fine expressions for each of kinds.

9. A program making a computer execute:
a process of capturing a subject's face with changing expressions according to guidance instructing expressions to a subject, and
a process of obtaining a changing-rate of expressions of the subject from images of the subject's face captured and obtained; and
a process of inferring an emotion of the subject depending on the changing rate.
